# EUROPEAN PATENT APPLICATION

(11) **EP 2 893 969 A1**
(43) Date of publication of application: **15.07.2015**
(21) Application number: 13834444.5
(22) Date of filing: 09.08.2013
(51) Int. Cl.: B01D 53/50, B01D 50/00, B01D 53/77, F23J 15/00, F23J 15/04

(54) **DESULFURIZATION DEVICE, AND SOOT REMOVAL SYSTEM**

(30) Priority: 10.09.2012 US 201213608097
(71) Applicant: Mitsubishi Hitachi Power Systems, Ltd., Yokohama 220-8401 (JP)
(72) Inventor: HASHIMOTO, Jun, New York, New York 10111 (US); SUGITA, Satoru, New York, New York 10111 (US); INABA, Norikazu, New York, New York 10111 (US); HONJO, Shintaro, New York, New York 10111 (US); NAGAYASU, Tatsuto, Tokyo 108-8215 (JP); OKAMOTO, Takuya, Tokyo 108-8215 (JP)
(74) Representative: Bongiovanni, Simone
(86) International application number: PCT/JP2013/071683
(87) International publication number: WO 2014/038354

(57) **Abstract**

A desulfurization apparatus includes: a desulfurization section (3) that brings exhaust gas containing sulfur oxide into gas-liquid contact with absorbing liquid to thereby remove the sulfur oxide; a folded-plate type demister (4) that is installed above the desulfurization section (3), and removes mist generated in the desulfurization section (3); a packing section (5) that is installed above the folded-plate type demister (4), has a same cross-sectional area as the desulfurization section (3) and the folded-plate type demister (4), and removes mist that is not removed by the folded-plate type demister (4); and a washing section (6) that injects water to the packing section (5). As a result of this, mist contained in the exhaust gas is easily and reliably reduced.

## Description

### {Technical Field}

The present invention relates to a desulfurization apparatus and a dust removal system.

### {Background Art}

In exhaust gas systems, such as a boiler, installed in a power plant etc., provided is a desulfurization apparatus that removes sulfur oxide from exhaust gas. As a result, sulfur oxide contained in the exhaust gas that is discharged in the atmosphere can be reduced.

In PTL 1, disclosed is a technology concerning an SO₃ removal apparatus that reduces SO₃ contained in flue gas without using a wet electric dust collecter.

### {Citation List}

### {Patent Literature}

### {PTL 1}

Japanese Unexamined Patent Application, Publication No. 2003-1054

### {Summary of Invention}

### {Technical Problem}

In a wet desulfurization apparatus, mist is generated in a desulfurization section inside a body. Although a mist eliminator is installed in an upper part of the body, a part of the generated mist is discharged to the outside of the wet desulfurization apparatus. Therefore, mist is trapped by a filter for measuring a dust concentration. Although a dust measurement apparatus is the apparatus that collects particles from the heated filter, and measures the dust concentration, salt (CaCl₂, MgCl₂, etc.) dissolved in the mist precipitates on the filter by heating, and thereby the salt is counted as dust.

Since such dust due to the mist is not dust contained in original exhaust gas discharged from the boiler etc., it is preferable to make the dust due to the mist not to be discharged from an outlet side of the wet desulfurization apparatus, and not to be counted by the dust measurement apparatus. However, a conventional mist eliminator provided with a folded-plate type demister with low pressure loss cannot remove mist of a minute particle diameter (for example, not more than 40 µm). In addition, although it becomes possible to remove minute mist if a demister with high pressure loss is used, a gas velocity in the desulfurization apparatus is reduced to a velocity to which the demister with high pressure loss can be applied, and thus expansion of a duct is needed, and thus facility cost increases.

Furthermore, although it can be also considered that a wet electrostatic precipitator is installed in the wake of the wet desulfurization apparatus to thereby remove the mist, a wide site for the wet electrostatic precipitator and introduction cost are needed. In addition, the wet electrostatic precipitator needs to use sodium hydroxide (NaOH), which is strong alkaline, in order to prevent corrosion thereinside.

The present invention has been made in view of such situations, and aims at providing a desulfurization apparatus and a dust removal system that can easily and reliably reduce mist contained in exhaust gas.

### {Solution to Problem}

A desulfurization apparatus pertaining to a first aspect of the present invention includes: a desulfurization section that brings exhaust gas containing sulfur oxide into gas-liquid contact with absorbing liquid to thereby remove the sulfur oxide; a first mist removal section that is installed above the desulfurization section, and removes mist generated in the desulfurization section; a second mist removal section that is installed above the first mist removal section, has a same cross-sectional area as the desulfurization section and the first mist removal section, and removes mist not removed by the first mist removal section; and a washing section that injects water to the second mist removal section.

According to this configuration, the second mist removal section or the washing section, both of which are installed above the first mist removal section, removes the mist not removed by the first mist removal section, and thus mist measured as dust in an outlet side of the desulfurization apparatus is reduced. As a result of it, a wet electrostatic precipitator for reducing a dust concentration in the wake of the desulfurization apparatus can be omitted. In addition, since the second mist removal section has the same cross-sectional area as the desulfurization section and the first mist removal section, expansion of the duct in the desulfurization apparatus is not needed, and substantial rise in facility cost can be suppressed.

In the first aspect of the present invention, the washing section may inject water continuously or intermittently to the second mist removal section.

According to this configuration, the washing section washes off salt attaching to the second mist removal section continuously or intermittently, and prevents the salt from accumulating on the second mist removal section. The mist not removed by the first mist removal section can be reliably removed by continuously operating the washing section. When the mist not removed by the first mist removal section can be removed only by the second mist removal section in a state without water injection by the washing section, the washing section may be intermittently operated. In addition, continuous operation and intermittent operation of the washing section may be switched, or an amount of water (L/G ratio) injected to the second mist removal section may be changed according to an exhaust gas flow rate supplied to the desulfurization section, a boiler load for discharging exhaust gas, etc.

In the first aspect of the present invention, a circulation system may be included in which water injected from the washing section is recovered, and the recovered water is injected from the washing section.

According to this configuration, since the water injected from the washing section is reused, an amount of water used by the washing section and discharged outside the desulfurization apparatus is reduced.

In the first aspect of the present invention, oxidizer may be added to the water that the washing section injects.

According to this configuration, when mercury is contained in the exhaust gas, mercury oxidizes with the oxidizer in the washing section, and thereby mercury can be reduced from the exhaust gas.

A dust removal system pertaining to a second aspect of the present invention includes: a heat recovery apparatus that cools exhaust gas; a dry dust collector that is installed after the heat recovery apparatus, and removes dust contained in exhaust gas supplied from the heat recovery apparatus; and the above-mentioned desulfurization apparatus that removes sulfur oxide from the exhaust gas supplied from the dry dust collector.

According to this configuration, SO₃ in sulfur oxide is condensed due to decrease in temperature of the exhaust gas in the heat recovery apparatus, and thus the dry dust collector located closer to the wake side than the heat recovery apparatus can remove the condensed SO₃ (sulfuric acid mist) together with dust. As a result of it, a wet electrostatic precipitator for removing sulfuric acid mist in the wake of the desulfurization apparatus can be omitted.

### {Advantageous Effects of Invention}

According to the present invention, mist not removed by the first mist removal section is removed by the second mist removal section or the washing section, and thus mist contained in the exhaust gas can be easily and reliably reduced.

### {Brief Description of Drawings}

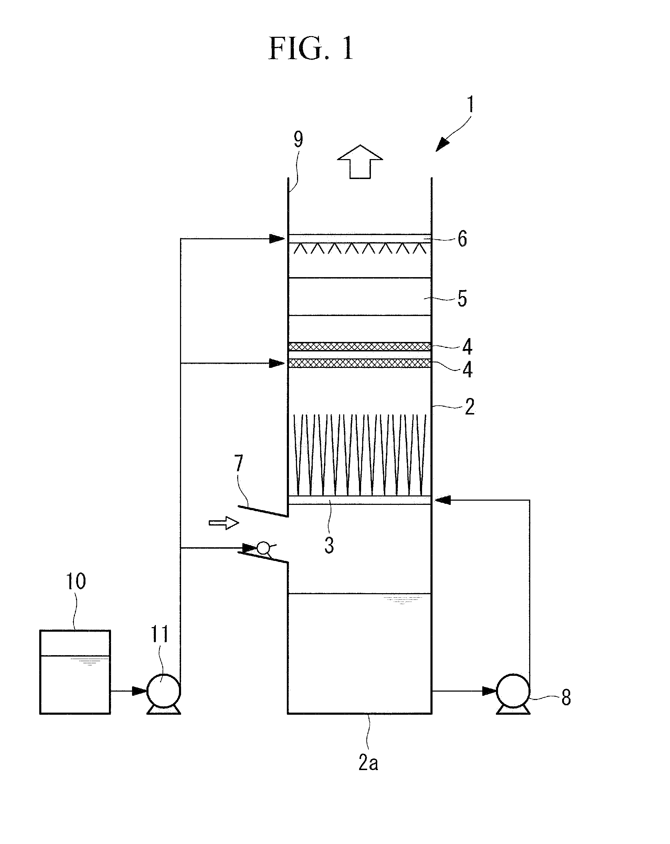

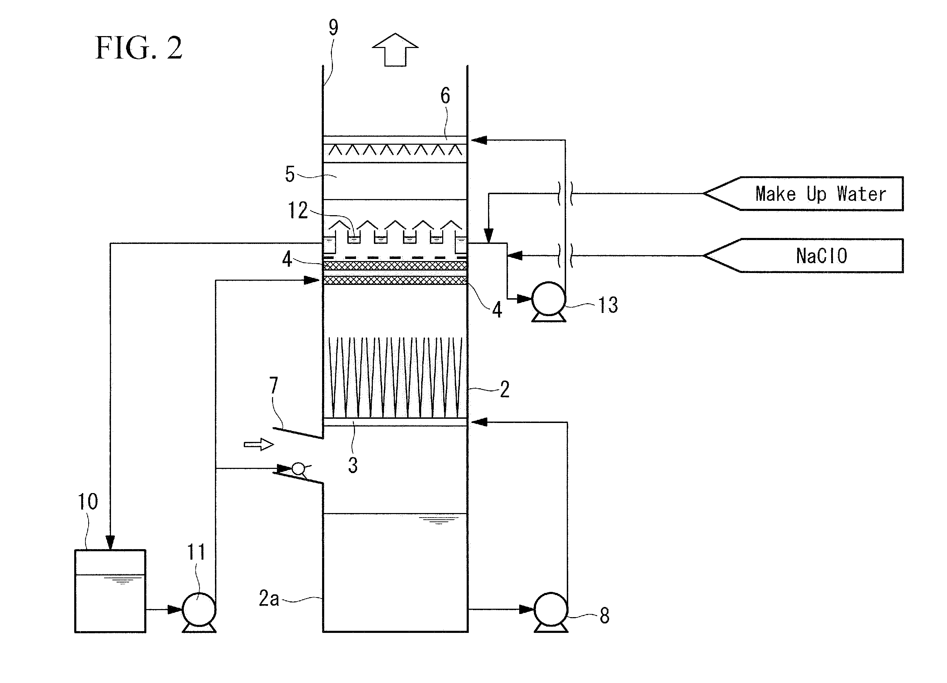

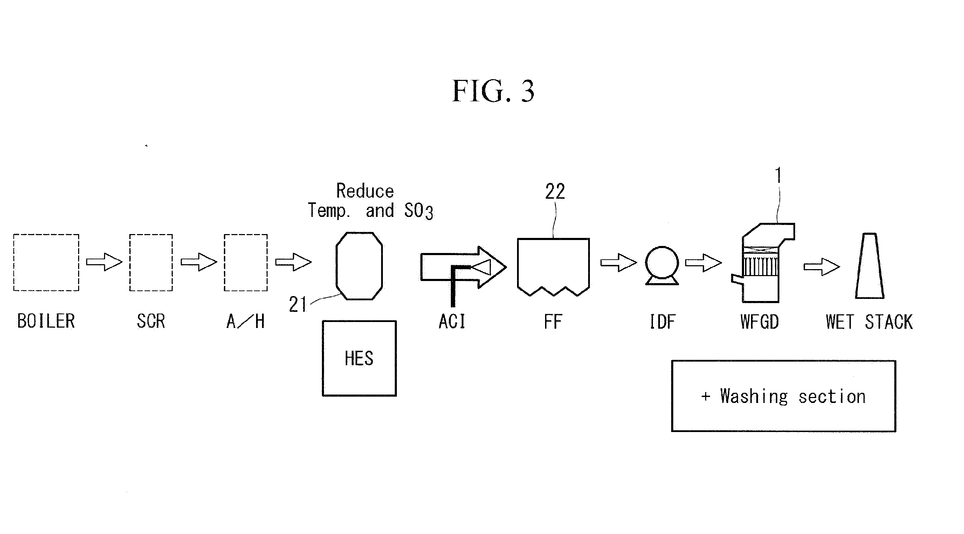

{Fig. 1} Fig. 1 is a schematic diagram showing a wet desulfurization apparatus pertaining to one embodiment of the present invention.
{Fig. 2} Fig. 2 is a schematic diagram showing a wet desulfurization apparatus pertaining to one embodiment of the present invention.
{Fig. 3} Fig. 3 is a schematic diagram showing a dust removal system pertaining to one embodiment of the present invention.

### {Description of Embodiments}

Hereinafter, a wet desulfurization apparatus 1 pertaining to one embodiment of the present invention will be described with reference to drawings.

The wet desulfurization apparatus 1 has a cylindrical body 2, and includes a desulfurization section 3, a folded-plate type demister 4, a packing section 5, and a washing section 6. In the wet desulfurization apparatus 1, the desulfurization section 3 injects absorbing liquid upward, and thereby the absorbing liquid gets gas-liquid contact with exhaust gas introduced from a gas introduction section 7 formed on a side surface of the body 2. The absorbing liquid is the liquid containing lime, and sulfur oxide contained in exhaust gas is removed by a lime-gypsum method. The absorbing liquid injected from the desulfurization section 3 is accumulated on a bottom of the body 2, and is again supplied to the desulfurization section 3 by a pump 8.

The folded-plate type demister 4 removes mist generated inside the body 2 using physical collision. Although the folded-plate type demister 4 has low pressure loss, it cannot remove mist of a minute particle diameter (for example, not more than 40 µm). Therefore, when the packing section 5 and the washing section 6 pertaining to the embodiment are not provided, there is a possibility that mist may be contained in exhaust gas discharged from a gas discharge section 9.

Industrial water is appropriately supplied to the folded-plate type demister 4 and the gas introduction section 7 through a pump 11 from a cleaning tank 10, and then attached matter is removed.

The packing section 5 removes mist unremovable by the folded-plate type demister 4 using the physical collision. However, the packing section 5 is packing usable even in a high flow velocity region of a gas velocity. The packing section 5 has a same cross-sectional area as the desulfurization section 3 or the folded-plate type demister 4. The packing section 5 is the packing that does not have too high pressure loss even though it has the same cross-sectional area as the desulfurization section 3 or the folded-plate type demister 4. Namely, if a demister with high pressure loss is used as the packing section 5, it becomes possible to remove minute mist. However, in this case, a gas velocity in the wet desulfurization apparatus 1 is reduced to a velocity to which the demister with high pressure loss can be applied, and thus expansion of a duct may be needed. In the embodiment, the packing section 5 is configured to be able to remove the mist unremovable by the folded-plate type demister 4, but to have the same cross-sectional area as the desulfurization section 3 and the folded-plate type demister 4 without expanding the duct, and to be usable in the high flow velocity region of the gas velocity.

Here, as the packing section 5, random packing, such as a Pall ring, a Raschig ring, and an Interlock saddle, and structured packing, such as packing can be exemplified.

To the washing section 6, supplied is industrial water from the cleaning tank 10 through the pump 11. The folded-plate type demister 4 and the gas introduction section 7 are set as a common water system, and thereby increase in cost is suppressed, or extension of the installed wet desulfurization apparatus 1 becomes easy. The washing section 6 washes off attached matter having attached to the packing section 5 using injected water. The packing section 5 and the washing section 6 prevent the mist unremovable by the folded-plate type demister 4 from being contained in the exhaust gas and discharged from the gas discharge section 9.

Since mist discharged outside from the wet desulfurization apparatus 1 is reduced, mist trapped by a filter for measuring a dust concentration is also reduced. As a result of it, when dust precipitating on the filter by heating is counted in the dust measurement apparatus, a precipitation amount of salt (CaCl₂, MgCl₂, etc.) dissolved into the mist is also reduced, and thus dust due to the mist also decreases. Accordingly, the dust measurement apparatus can measure a concentration of dust contained in original exhaust gas discharged from a boiler etc.

Cleaning by the washing section 6 may be performed intermittently, or may be performed continuously. For example, when mist can be removed only with the pressure loss of the packing section 5, the packing section 5 is cleaned by intermittent operation. As a result, a usage amount of the industrial water, an amount of water discharged from the wet desulfurization apparatus 1, and power of the pump 11 can be reduced. As a method to intermittently perform cleaning, a method is included in which the packing section 5 is virtually divided into a plurality of areas, and water is injected for each area.

When the packing section 5 is cleaned by continuous operation, an L/G ratio (ratio of a liquid amount to a flow rate of gas that passes through the packing section 5) is adjusted so that mist is not re-scattered due to occurrence of flooding. The L/G ratio is, for example, set to be approximately 1.0 L/m³N to 2.0 L/m³N. At this time, dust due to the mist can be reduced to approximately 0.1 mg/m³N-dry.

Namely, a concentration of the mist from an outlet of the folded-plate type demister 4 of the wet desulfurization apparatus 1 is approximately 50 mg/m³N-dry, since the folded-plate type demister 4 cannot remove the mist of the minute particle diameter. Since salt is dissolved in the mist, the salt dissolved in the mist precipitates on the heated filter due to the mist trapped by the filter when dust is measured, and it is counted as dust. Accordingly, a concentration of the dust due to the mist changes according to a Cl concentration.

A Cl concentration in slurry in an absorption tower of the wet desulfurization apparatus 1 is desirably low from a viewpoint of desulfurization performance and metal material selection. However, assuming that the Cl concentration in the slurry in the absorption tower is 20,000 ppm, the concentration of the mist from the outlet of the folded-plate type demister 4 is approximately 50 mg/m³N-dry, and thus there is a possibility that dust of approximately 2 mg/m³N-dry may be counted as the dust due to the mist.

As the above-mentioned embodiment, when 95% of the mist discharged from the folded-plate type demister 4 can be removed by installing the packing section 5 above the folded-plate type demister 4, a concentration of dust due to mist from an outlet of the packing section 5 can be reduced to approximately 0.1 mg/m³N-dry.

In addition, according to an exhaust gas flow rate supplied to the desulfurization section 3, a boiler load for discharging exhaust gas, etc., continuous operation and intermittent operation of the washing section 6 may be switched, or an amount of water (L/G ratio) that the washing section 6 injects to the packing section 5 may be changed. It is to be noted that in order to change the amount of water (L/G ratio) that the washing section 6 injects, the plurality of pumps 11 that supply water from the cleaning tank 10 may be installed. If the plurality of pumps 11 are installed, control of an amount of water at the time of turndown also becomes easy.

In the above-mentioned embodiment, when water is supplied to the packing section 5 by the washing section 6, used water is accumulated on a bottom 2a of the wet desulfurization apparatus 1, and thus it is necessary to appropriately discharge the accumulated water to the outside. Consequently, a circulation system may be provided as in a modified example shown in Fig. 2. Namely, chimney trays 12 are installed inside the body 2, and water having passed through the packing section 5 is recovered. The recovered water is again supplied to the washing section 6 through a pump 13, or is supplied to the cleaning tank 10. As a result of this, a usage amount of water supplied to the packing section 5 and an amount of water discharged to the outside can be reduced.

It is to be noted that oxidizer, such as hypochlorous acid (NaClO), may be added to circulating water supplied to the washing section 6. As a result of this, when mercury is contained in exhaust gas that passes through the desulfurization section 3 and flows upward, the mercury is oxidized to be removed from the exhaust gas. In this case, the wet desulfurization apparatus 1 may be configured such that a mercury concentration is monitored, and thereby an amount of circulating water to be supplied can be adjusted. If the plurality of pumps 13 are installed, control of an amount of circulating water at the time of turnup, etc. becomes easy.

Next, a dust removal system to which the above-mentioned wet desulfurization apparatus 1 is applied will be described with reference to Fig. 3. The dust removal system includes: a heat recovery apparatus 21 that cools exhaust gas; a dry dust collector 22 that is installed closer to a wake side than the heat recovery apparatus 21, and removes dust contained in exhaust gas supplied from the heat recovery apparatus 21; the wet desulfurization apparatus 1 that removes sulfur oxide from exhaust gas supplied from the dry dust collector 22; and the like. The dust removal system is provided in a boiler exhaust system, and in the boiler exhaust system, for example, installed are: an SCR (Selective Catalytic Reduction) denitration apparatus; an A/H (Air Heater); an ACI (Activated Carbon Injection) section; an IDF (Induced Draft Fan); a wet stack; and the like in addition to the heat recovery apparatus 21, the dry dust collector 22, and the wet desulfurization apparatus 1.

According to the embodiment, SO₃ in sulfur oxide is condensed due to decrease in temperature of the exhaust gas in the heat recovery apparatus 21, and thus the dry dust collector 22 located closer to the wake side than the heat recovery apparatus 21 can remove the condensed SO₃ (sulfuric acid mist) together with dust. As a result of it, a wet electrostatic precipitator for removing sulfuric acid mist in the wake of the wet desulfurization apparatus 1 can be omitted. In addition, sulfuric acid mist can be removed by the dry dust collector 22, and thus an amount of water that the washing section 6 of the wet desulfurization apparatus 1 injects to the packing section 5 can be reduced.

### {Reference Signs List}

- 1: Wet desulfurization apparatus
- 2: Body
- 2a: Bottom
- 3: Desulfurization section
- 4: Folded-plate type demister (First mist removal section)
- 5: Packing section (Second mist removal section)
- 6: Washing section
- 7: Gas introduction section
- 8: Pump
- 9: Gas discharge section
- 10: Cleaning tank
- 11: Pump
- 12: Chimney tray
- 13: Pump

## Claims

1. A desulfurization apparatus comprising:
a desulfurization section that brings exhaust gas containing sulfur oxide into gas-liquid contact with absorbing liquid to thereby remove the sulfur oxide;
a first mist removal section that is installed above the desulfurization section, and removes mist generated in the desulfurization section;
a second mist removal section that is installed above the first mist removal section, has a same cross-sectional area as the desulfurization section and the first mist removal section, and removes mist that is not removed by the first mist removal section; and
a washing section that injects water to the second mist removal section.

2. The desulfurization apparatus according to claim 1, wherein the washing section injects water continuously or intermittently to the second mist removal section.

3. The desulfurization apparatus according to claim 1, comprising a circulation system in which water injected from the washing section is recovered, and the recovered water is injected from the washing section.

4. The desulfurization apparatus according to claim 3, wherein oxidizer is added to the water that the washing section injects.

5. A dust removal system comprising:
a heat recovery apparatus that cools exhaust gas;
a dry dust collector that is installed after the heat recovery apparatus, and removes dust contained in exhaust gas supplied from the heat recovery apparatus; and
the desulfurization apparatus according to claim 1 that removes sulfur oxide from the exhaust gas supplied from the dry dust collector.
